# EUROPEAN PATENT APPLICATION

(11) **EP 4 550 283 A1**
(43) Date of publication of application: **07.05.2025**
(21) Application number: 24202137.6
(22) Date of filing: 24.09.2024
(51) Int. Cl.: G07C 9/00, B60R 25/24, E05B 19/00, H04K 3/00

(54) **KEY UNIT**

(30) Priority: 30.10.2023 JP 2023185608
(71) Applicant: Aisin Corporation, Aichi 448-8650 (JP)
(72) Inventor: KUNIEDA, Yoshihiro, Kariya, 448-8650 (JP); TSUJI, Haruki, Kariya, 448-8650 (JP)
(74) Representative: TBK

(57) **Abstract**

A key unit (1) that houses an electronic key (3) of a vehicle (2) includes: an interference antenna (10) configured to propagate, in the air, interference radio waves interfering with communication performed using a first frequency band between a transmission antenna of the vehicle and the electronic key; a communication antenna (12) configured to communicate with a mobile terminal (5) in a second frequency band different from the first frequency band; and a control unit (14) configured to control an output of the interference antenna according to a communication content in the second frequency band.

## Description

### TECHNICAL FIELD

This disclosure relates to a key unit for locking and unlocking a door lock of a vehicle.

### BACKGROUND DISCUSSION

In the related art, an electronic key capable of locking and unlocking a door lock of a vehicle is used. On the other hand, in recent years, car sharing in which one vehicle is shared and used has become widespread. When such car sharing is used, since the transfer of the electronic key is troublesome, a technique capable of easily using the car sharing has been studied (for example, see JP 2023-9917A (Reference 1)).

Reference 1 discloses a key storage unit. The key storage unit includes a housing unit capable of housing an electronic key that transmits and receives radio waves having two different frequencies related to smart communication. The housing unit is covered with an attenuation material capable of attenuating the radio waves having one of the two frequencies to a level at which communication cannot be performed. A terminal carried by a user and the key storage unit communicate with each other by near field communication, and when the terminal is authenticated by the communication, an electronic key is operated by a key operation mechanism mounted on the key storage unit, and wireless radio waves (radio waves not attenuated by the attenuation material) are transmitted, thereby locking and unlocking the vehicle. In addition, the key storage unit is locked, and is unlocked when the terminal is authenticated, and an engine can be started by taking out the electronic key from the key storage unit. By registering a target terminal in a control unit disposed outside the housing unit, the terminal can be used as a digital key serving as a key of the vehicle.

In the key storage unit described in Reference 1, it is necessary to take out the electronic key from the housing unit at the time of starting the engine. In addition, when the vehicle is used in the car sharing, it is necessary to store the electronic key in the key storage unit when the vehicle is returned. Therefore, when the engine is started or when the vehicle is returned, troublesome work is generated for the user.

A need thus exists for a key unit that can be easily used.

### SUMMARY

A characteristic configuration of a key unit disclosed here is that a key unit that houses an electronic key of a vehicle includes: an interference antenna configured to propagate, in the air, interference radio waves interfering with communication performed using a first frequency band between a transmission antenna of the vehicle and the electronic key; a communication antenna configured to communicate with a mobile terminal in a second frequency band different from the first frequency band; and a control unit configured to control an output of the interference antenna according to a communication content in the second frequency band.

According to this characteristic configuration, the interference radio waves are propagated in the air from the interference antenna to the first frequency band used for the communication between the transmission antenna of the vehicle and the electronic key, thereby interfering with the communication between the transmission antenna of the vehicle and the electronic key. Even when the interference radio waves are propagated in the air, the radio waves in the second frequency band can be received by the communication antenna. Therefore, when the radio waves are received, the propagation of the interference radio waves in the air is stopped, and an engine can be started using the first frequency band. Accordingly, it is not necessary to provide a mechanism for shielding the radio waves in the first frequency band or to take out the electronic key from a place for shielding the radio waves in the first frequency band, and thus the key unit can be easily used.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a diagram showing a vehicle including a key unit;
Fig. 2 is a schematic diagram showing a configuration of the key unit;
Fig. 3 is a diagram showing a communication state when interference radio waves are output;
Fig. 4 is a diagram showing a communication state when no interference radio wave is output;
Fig. 5 is a diagram showing an example of an operation mechanism; and
Fig. 6 is a timing chart.

### DETAILED DESCRIPTION

A key unit disclosed here can lock and unlock a door lock of a vehicle from outside the vehicle in a state where an electronic key is provided in a vehicle cabin. Hereinafter, a key unit 1 of the embodiment will be described. However, the key unit 1 is not limited to the following embodiments, and various modifications can be made without departing from the gist of the key unit 1.

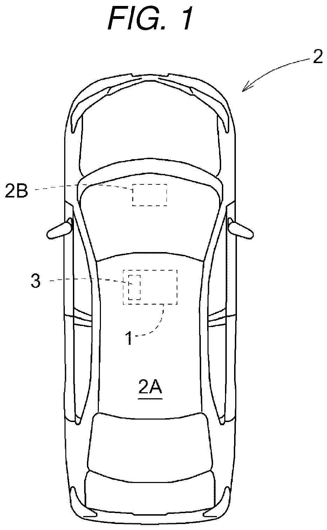

Fig. 1 is a diagram showing a vehicle 2 including the key unit 1. As shown in Fig. 1, the key unit 1 is provided in a vehicle cabin 2A of the vehicle 2. Although not particularly limited, the key unit 1 may be disposed in a space between a driver seat and a front passenger seat of the vehicle cabin 2A, or may be disposed in a glove box.

As described above, the key unit 1 can perform the locking and unlocking of the door lock of the vehicle 2. The door lock of the vehicle 2 means a lock mechanism provided on a door of the vehicle 2, and the locking and unlocking of the door lock of the vehicle 2 means locking or unlocking of the lock mechanism (door lock) of the door of the vehicle 2. The locking and unlocking of the door lock includes locking and unlocking of a lock mechanism of a trunk of the vehicle 2. Although Fig. 1 shows the vehicle 2 including a hinge door, when the vehicle 2 includes a slide door or a back door, the key unit 1 can lock and unlock a lock mechanism of the slide door or the back door. When the vehicle 2 includes a slide door or a back door, the key unit 1 can open and close the slide door or the back door. Hereinafter, "making the lock mechanism in a locked state" is referred to as "locking the door lock", and "making the lock mechanism in an unlocked state" is referred to as "unlocking the door lock".

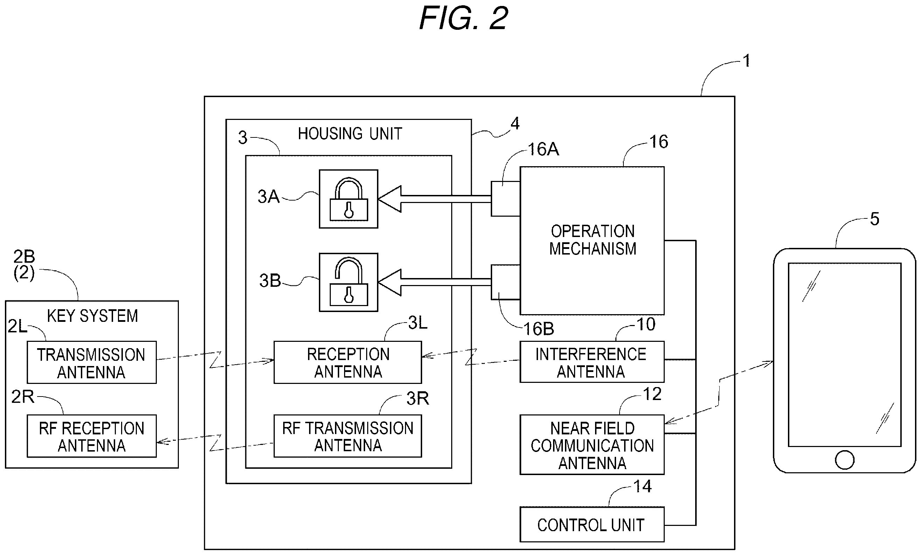

The key unit 1 can house an electronic key 3 capable of locking and unlocking the door lock of the vehicle 2. The electronic key 3 is a key that is associated with the vehicle 2, and is a key capable of locking and unlocking the door lock of the vehicle 2 by pressing a locking and unlocking switch (described later) of the electronic key 3 or touching a predetermined portion of the door, or capable of starting or stopping an engine by pressing an engine start button. The key unit 1 is provided with a housing unit 4 (see Fig. 2) therein, and the electronic key 3 can be housed in the housing unit 4.

Next, a configuration of the key unit 1 will be described. Fig. 2 is a schematic diagram showing the configuration of the key unit 1. As shown in Fig. 2, the key unit 1 includes an interference antenna 10, a near field communication antenna (an example of a "communication antenna") 12, a control unit 14, and an operation mechanism 16. In order to perform processing related to the locking and unlocking of the door lock of the vehicle 2, each functional unit is constructed by hardware, software, or both of them using a CPU as a core member.

A key system 2B of the vehicle 2 and the electronic key 3 communicate with each other via radio waves. Specifically, for example, radio waves in a low frequency (LF) band of 30 kHz to 300 kHz or a very low frequency (VLF) band (an example of a "first frequency band") of 3 kHz to 30 kHz are used for communication from the vehicle 2 to the electronic key 3, and radio waves in a radio frequency (RF) band of several hundred MHz are used for communication from the electronic key 3 to the vehicle 2. Therefore, the key system 2B of the vehicle 2 includes a transmission antenna 2L for transmitting the radio waves in the LF band or the VLF band and an RF reception antenna 2R for receiving the radio waves in the RF band. The electronic key 3 includes a reception antenna 3L for receiving the radio waves in the LF band or the VLF band and an RF transmission antenna 3R for transmitting the radio waves in the RF band.

In general, when the electronic key 3 is in the vehicle cabin 2A, an alarm is generated when a user leaves the vehicle. There is a case where the door lock in the unlocked state cannot be locked from the outside of the vehicle, or there is a case where the door lock in the locked state cannot be unlocked from the outside of the vehicle. Further, the electronic key 3 may communicate at predetermined time intervals after the authentication by the key system 2B of the vehicle 2. The key unit 1 interferes with communication between the electronic key 3 and the key unit 1 such that the door lock of the vehicle 2 can be locked or unlocked from the outside of the vehicle even when the electronic key 3 is in the vehicle cabin 2A.

Such interference is implemented by propagating interference radio waves from the interference antenna 10 in the air. The interference antenna 10 propagates, in the air, the interference radio waves interfering with communication performed using the first frequency band between the transmission antenna 2L of the key system 2B of the vehicle 2 and the reception antenna 3L of the electronic key 3. Here, the electronic key 3 is housed in the housing unit 4 of the key unit 1, and the interference antenna 10 is also provided in the key unit 1. Therefore, the interference radio waves (the radio waves in the same frequency band as the first frequency band or the radio waves in the frequency band corresponding to the multiplication of the first frequency band) may be an output having an intensity that reaches the reception antenna 3L at least. For example, it is preferable that the reception antenna 3L cannot receive the radio waves from the transmission antenna 2L due to such interference radio waves.

The near field communication antenna 12 communicates with a mobile terminal 5 outside the vehicle in a second frequency band different from the first frequency band. The second frequency band may be, for example, an ultra high frequency (UHF) band. The mobile terminal 5 is the mobile terminal 5 carried by the user who performs locking and unlocking of the door lock of the vehicle 2, and corresponds to, for example, a smartphone or a personal computer. The user is a user who owns the registered mobile terminal 5. An application capable of communicating with the key unit 1 is installed in the mobile terminal 5 in advance, and a locking and unlocking command for locking or unlocking the door lock is input via the application. When the locking and unlocking command is input to the mobile terminal 5, radio waves (command radio waves) in the UHF band is output from the mobile terminal 5. Such communication using the radio waves in the UHF band can use so-called near field communication.

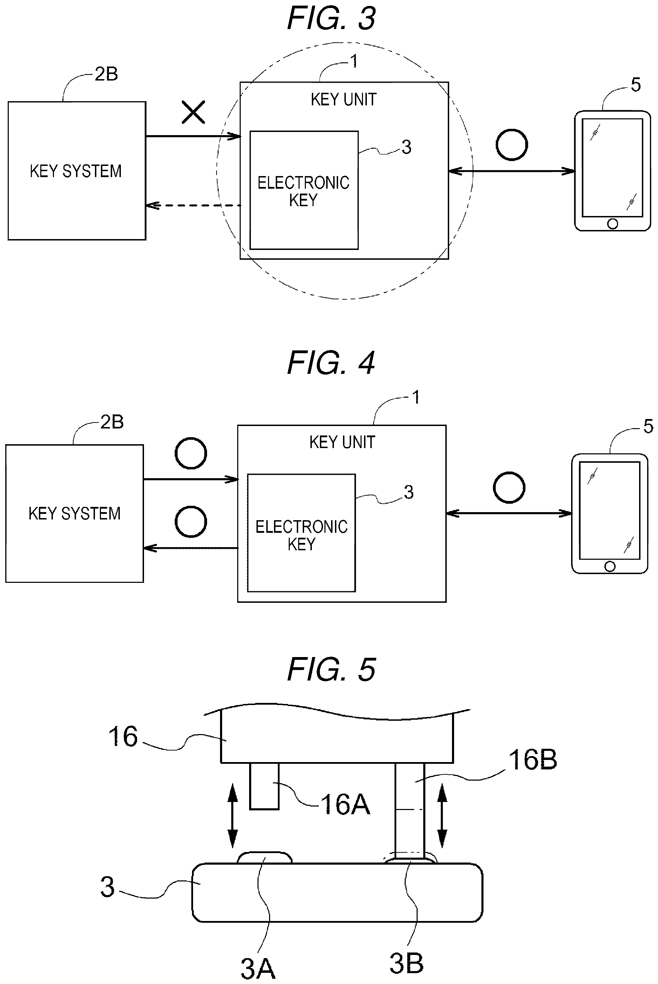

Fig. 3 shows a schematic diagram of such a communication state. That is, as shown in Fig. 3, when interference radio waves are output from the interference antenna 10 of the key unit 1, communication from the key system 2B to the key unit 1 cannot be performed (indicated by "x" in Fig. 3). In this case, the key unit 1 and the mobile terminal 5 can communicate with each other (indicated by "o" in Fig. 3). The communication (information) transmitted from the vehicle 2 to the electronic key 3 cannot be received, but the communication (information) transmitted from the electronic key 3 to the vehicle 2 can be transmitted.

Returning to Fig. 2, the control unit 14 controls the output of the interference antenna according to a communication content in the second frequency band. "According to a communication content" includes a case where the radio waves (command radio waves) in the UHF band are received from the mobile terminal 5 and a case where the radio waves are not received. In addition, "control the output of the interference antenna" includes control to cause the interference antenna 10 to output the interference radio waves and control to stop the output of the interference radio waves. The control unit 14 stops the output of the interference radio waves when it is determined that the user is in the vehicle cabin 2A.

Accordingly, when the control unit 14 receives the radio waves (unlocking command) in the UHF band from the mobile terminal 5 and it is determined that the user is in the vehicle cabin 2A, the control unit 14 causes the interference antenna 10 to stop the output of the interference radio waves. In addition, when the control unit 14 receives the radio waves (unlocking command) in the UHF band from the mobile terminal 5 and it is not determined that the user is in the vehicle cabin 2A, the control unit 14 causes the interference antenna 10 to output the interference radio waves. Further, when the control unit 14 does not receive the radio waves (unlocking command) in the UHF band from the mobile terminal 5, the control unit 14 causes the interference antenna 10 to output the interference radio waves. When the output of the interference radio waves from the interference antenna 10 is stopped, as shown in Fig. 4, communication from the key system 2B to the key unit 1 can be performed (indicated by "o" in Fig. 4), and communication from the key unit 1 to the key system 2B can also be performed (indicated by "o" in Fig. 4). In this case, the key unit 1 and the mobile terminal 5 can communicate with each other (indicated by "o" in Fig. 4).

Whether the user is in the vehicle cabin 2A can be determined based on, for example, an intensity of the communication performed between the near field communication antenna 12 and the mobile terminal 5. Alternatively, a seating sensor (load sensor) can be provided in a seat of the vehicle 2, and it can be determined whether the user is in the vehicle cabin 2A based on a load detected by the seating sensor. Accordingly, a state where it is determined that the user is in the vehicle cabin 2A can be specified based on the intensity of such communication and a detection result of the seating sensor.

It is preferable that the control unit 14 causes the interference radio waves to be output when the radio waves in the second frequency band are not received in a state where the mobile terminal 5 is away from the vehicle 2 and it is determined that no user is in the vehicle cabin 2A. The state where the mobile terminal 5 is away from the vehicle 2 corresponds to a state where the mobile terminal 5 is gradually away from the key unit 1, and a state where the mobile terminal 5 is away from the key unit 1 by a predetermined distance (for example, several meters) or more. Whether the user is in the vehicle cabin 2A can be specified based on, for example, the intensity of the communication performed between the near field communication antenna 12 and the mobile terminal 5 or the detection result of the seating sensor (load sensor) in the seat of the vehicle 2 as described above.

In the state where the mobile terminal 5 is gradually away from the key unit 1 or the state where the mobile terminal 5 is away from the key unit 1 by the predetermined distance (for example, several meters) or more and in the state where it is determined that no user is in the vehicle cabin 2A, when the near field communication antenna 12 does not receive the radio waves in the second frequency band from the mobile terminal 5, the control unit 14 causes the interference antenna 10 to propagate the interference radio waves in the air.

The operation mechanism 16 operates the locking and unlocking switch provided in the electronic key 3 according to the locking and unlocking command. As described above, the locking and unlocking command is acquired by a signal processing unit (not shown) from the radio waves of the second frequency band from the mobile terminal 5 received by the near field communication antenna 12. At this time, it is preferable to determine whether the locking and unlocking command is a locking command for locking the door lock or an unlocking command for unlocking the door lock. In the embodiment, the locking and unlocking switch is a generic term for a locking switch 3A and an unlocking switch 3B, and is described as the locking and unlocking switches 3A and 3B when they are not particularly distinguished.

As shown in Fig. 5, the operation mechanism 16 of the embodiment includes a locking switch operation unit 16A that presses the locking switch 3A, and an unlocking switch operation unit 16B that presses the unlocking switch 3B. When the locking and unlocking command is the locking command, as shown in FIG. 5, the operation mechanism 16 is configured such that the locking switch operation unit 16A of the operation mechanism 16 presses the locking switch 3A of the electronic key 3, and when the locking and unlocking command is the unlocking command, the operation mechanism 16 is configured such that the unlocking switch operation unit 16B of the operation mechanism 16 presses the unlocking switch 3B of the electronic key 3. The locking switch operation unit 16A and the unlocking switch operation unit 16B return to their original positions (positions where they are not pressed) after the locking switch 3A and the unlocking switch 3B are pressed, respectively.

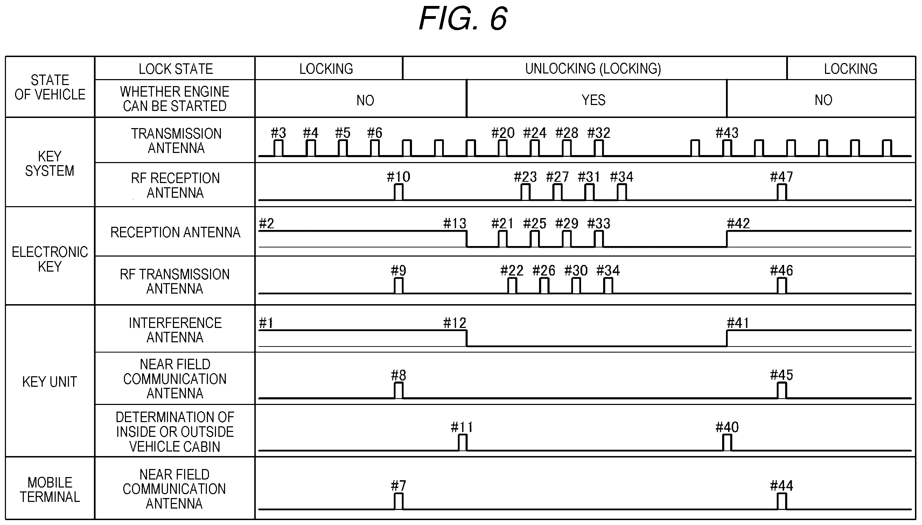

Next, the state of the key unit 1 will be described with reference to a timing chart of Fig. 6. Here, the door lock of the vehicle 2 is in the locked state, and in a state where the engine cannot be started (in Fig. 6, as the state of the vehicle 2, a lock state is indicated as "locked", and whether the engine can be started is indicated as "no"). In such a state, the interference radio waves are propagated in the air from the interference antenna 10 of the key unit 1 (#1). Accordingly, the communication between the reception antenna 3L of the electronic key 3 and the transmission antenna 2L of the vehicle 2 is interfered (#2), and the reception antenna 3L cannot respond to the signal from the transmission antenna 2L of the vehicle 2 (#3, #4, #5, #6).

In a state where the interference radio waves are propagated in the air from the interference antenna 10 of the key unit 1, when the radio waves (the unlocking command of the door lock) in the second frequency band are output from the near field communication antenna 12 of the mobile terminal 5 (#7), the near field communication antenna 12 of the key unit 1 receives the command radio waves (#8). When the key unit 1 receives the radio waves (unlocking command) in the second frequency band, the unlocking switch operation unit 16B of the operation mechanism 16 presses the unlocking switch 3B. Accordingly, an unlocking request is output from the RF transmission antenna 3R of the electronic key 3 (#9). When the unlocking request is received (#10), the vehicle 2 unlocks the door lock.

Further, the key unit 1 determines whether there is a user in the vehicle cabin 2A. When it is determined that the user is in the vehicle cabin 2A (#11), the key unit 1 stops the propagation of the interference radio waves from the interference antenna 10 in the air (#12). Accordingly, the interference of the electronic key 3 to the reception antenna 3L can be released (#13), and the radio waves from the transmission antenna 2L of the vehicle 2 can be received.

Thereafter, the communication between the vehicle 2 and the electronic key 3 is performed. Specifically, the communication from the vehicle 2 to the electronic key 3 is performed by a reception antenna 5L of the electronic key 3 receiving the radio waves from the transmission antenna 2L of the vehicle 2, and the communication from the electronic key 3 to the vehicle 2 is performed by the RF reception antenna 2R of the vehicle 2 receiving radio waves from an RF transmission antenna 5R of the electronic key 3 (#20 to #34). In this state, the engine of the vehicle 2 can be started (in Fig. 6, as the state of the vehicle 2, the lock state is indicated as "unlocked (locked)", and whether the engine can be started is indicated as "yes").

Thereafter, when the vehicle 2 is parked and the user is not present in the vehicle cabin 2A (#40), the interference radio waves are output from the interference antenna 10 of the key unit 1 (#41). Accordingly, the communication between the reception antenna 3L of the electronic key 3 and the transmission antenna 2L of the vehicle 2 is interfered (#42), and the reception antenna 3L cannot respond to the signal from the transmission antenna 2L of the vehicle 2 (#43).

Then, when the radio waves (the locking command of the door lock) in the second frequency band are output from the near field communication antenna 12 of the mobile terminal 5 (#44), the near field communication antenna 12 of the key unit 1 receives the command radio waves (#45). When the key unit 1 receives the radio waves (locking command) in the second frequency band, the locking switch operation unit 16A of the operation mechanism 16 presses the locking switch 3A. Accordingly, a locking request is output from the RF transmission antenna 3R of the electronic key 3 (#46). When the locking request is received (#47), the vehicle 2 locks the door lock (in Fig. 6, as the state of the vehicle 2, the lock state is indicated as "locked", and whether the engine can be started is indicated as "no").

The number of times of communication related to locking, unlocking, and engine start shown in Fig. 6 is an example, and can be appropriately changed.

### Other Embodiments

Next, another embodiment of the key unit 1 will be described.

In the above embodiment, the control unit 14 stops the output of the interference radio waves when it is determined that the user is in the vehicle cabin 2A. However, regardless of whether it is determined that the user is in the vehicle cabin 2A, the output of the interference radio waves may be stopped when the radio waves in the second frequency band are received. in a state where it is determined that the user is in the vehicle cabin 2A, the output of the interference radio waves may be stopped when the radio waves in the second frequency band are received. When it is determined that the mobile terminal 5 is close to the vehicle 2, the output of the interference radio waves may be stopped.

In the above embodiment, the control unit 14 causes the interference radio waves to be output when the radio waves in the second frequency band are not received in a state where the mobile terminal 5 is away from the vehicle 2 and it is determined that no user is in the vehicle cabin 2A. However, in a state where the mobile terminal 5 is away from the vehicle 2, the control unit 14 may cause the interference radio waves to be output when the radio waves in the second frequency band are not received regardless of whether it is determined that no user is in the vehicle cabin 2A. Regardless of whether the mobile terminal 5 is away from the vehicle 2, in a state where it is determined that no user is in the vehicle cabin 2A, when the radio waves in the second frequency band are not received, the interference radio waves may be output. Further, the control unit 14 may cause the interference radio waves to be output when the radio waves in the second frequency band are not received regardless of whether the mobile terminal 5 is away from the vehicle 2 and regardless of whether it is determined that no user is in the vehicle cabin 2A.

In the above embodiment, the key unit 1 includes the operation mechanism 16 that operates the locking and unlocking switches 3A and 3B provided in the electronic key 3 according to a locking and unlocking command. However, the key unit 1 may not include the operation mechanism 16. The operation mechanism 16 may operate only one of the locking switch 3Aand the unlocking switch 3B.

Instead of the locking and unlocking command, the unlocking switch operation unit 16B of the operation mechanism 16 may operate the unlocking switch 3B when the intensity of the communication performed between the near field communication antenna 12 and the mobile terminal 5 exceeds a preset value, and the locking switch operation unit 16A of the operation mechanism 16 may operate the locking switch 3A when the intensity of the communication is equal to or less than the preset value.

Further, a distance from the near field communication antenna 12 to the mobile terminal 5 may be calculated based on the intensity of the communication performed between the near field communication antenna 12 and the mobile terminal 5, the unlocking switch operation unit 16B of the operation mechanism 16 may operate the unlocking switch 3B when the calculated distance exceeds a preset value, and the locking switch operation unit 16A of the operation mechanism 16 may operate the locking switch 3A when the calculated distance is equal to or less than the preset value. In such a case, it is also possible to provide an antenna different from the near field communication antenna 12 and calculate a distance to the mobile terminal 5 by the antenna. When a position of the user with respect to the vehicle 2 is determined based on the distance or the communication intensity, a plurality of antennas may be used, or an antenna different from the near field communication antenna 12 may be used.

In the above embodiment, the control unit 14 determines whether the user is in the vehicle cabin 2A based on the intensity of the communication performed between the near field communication antenna 12 and the mobile terminal 5. However, the control unit 14 may determine whether the user is in the vehicle cabin 2A based on the detection result of the seating sensor provided in the seat as described above, or may determine whether the user is in the vehicle cabin 2A based on a captured image of the vehicle cabin 2A. A sensor capable of detecting that a steering wheel of the vehicle 2 is gripped may be provided in the steering wheel, and it may be determined whether the user is in the vehicle cabin 2A based on the detection result of the sensor. Further, the mobile terminal 5 may determine that the user is in the vehicle cabin 2A by, for example, bringing the mobile terminal 5 close to the key unit 1.

In the above embodiment, the control unit 14 causes the interference antenna 10 to stop the output of the interference radio waves when the radio waves (unlocking command) in the UHF band are received from the mobile terminal 5 and it is determined that the user is in the vehicle cabin 2A, causes the interference antenna 10 to output the interference radio waves when the radio waves (unlocking command) in the UHF band are received from the mobile terminal 5 and it is not determined that the user is in the vehicle cabin 2A, and causes the interference antenna 10 to output the interference radio waves when the radio waves (unlocking command) in the UHF band is not received from the mobile terminal 5. However, the control unit 14 may cause the interference radio waves to be output or stopped depending on whether command radio waves including information indicating whether to output or stop the interference radio waves are received from the mobile terminal 5.

The key unit 1 includes a power source (battery) and can continue to output the interference radio waves even when a power supply from the vehicle 2 is cut off. When the key unit 1 does not include a power source (battery), the key unit 1 is basically supplied with power from the vehicle 2, but when a third party enters the vehicle 2 and cuts off the power supply to the key unit 1, the output of the interference radio waves is stopped. However, since the key unit 1 includes the power source (battery), even when the power supply is unintentionally cut off, it is possible to prevent the engine start by continuously outputting the interference radio waves.

In addition to registering the mobile terminal 5 in the key unit 1 in advance, an authentication unit that authenticates whether the mobile terminal 5 is registered in the key unit 1 in advance may be provided. Accordingly, only the specific mobile terminal 5 can be used.

In the key unit 1, the above functional units can be separately provided. In this case, each functional unit can also implement the above functions and control. In this case, the control unit 14, the near field communication antenna 12, and the like can be implemented as separate units.

The key unit 1 may monitor a power source state of the vehicle 2 and control whether to output jamming according to the power source state of the vehicle 2. In such a case, the disclosure can be applied to a case where it is desired to output jamming in the engine start state.

The key unit 1 may perform locking and unlocking control by inputting an electric signal to the vehicle 2 in a wired or wireless manner instead of pressing a button. Such a function may be added to the key unit 1. Accordingly, the key unit 1 can be used by modifying the vehicle 2 (directly inputting an electric signal to a locking and unlocking control device), not through the electronic key 3.

Although the key unit 1 has been described above, according to the key unit 1, it is possible to automatically control the locking and unlocking of the door lock based on a request from the mobile terminal 5 or approach determination to the vehicle 2. In this case, it can be performed based on an intensity of radio waves or a distance to the user. After it is determined whether the user is in the vehicle cabin, it is possible to start the engine or stop jamming in response to the request from the mobile terminal 5. Whether the user is in the vehicle cabin can be determined based on an intensity of radio waves, a distance, an image, a sensor, and super-proximity communication. The request from the mobile terminal 5 may stop jamming after receiving the request from the mobile terminal 5, and start the engine by an electric signal directly from the key unit 1.

### Overview of Above Embodiments

An overview of the key unit 1 described above will be described below.
(1) The key unit 1 is the key unit 1 that houses the electronic key 3 of the vehicle 2. The key unit 1 includes: the interference antenna 10 configured to propagate, in the air, interference radio waves interfering with communication performed using a first frequency band between the transmission antenna of the vehicle 2 and the electronic key 3; the near field communication antenna (communication antenna) 12 configured to communicate with the mobile terminal 5 in a second frequency band different from the first frequency band; and the control unit 14 configured to control an output of the interference antenna according to a communication content in the second frequency band.

According to this configuration, the interference radio waves are propagated in the air from the interference antenna 10 to the first frequency band used for the communication between the transmission antenna 2L of the vehicle 2 and the electronic key 3, thereby interfering with the communication between the transmission antenna 2L of the vehicle 2 and the electronic key 3. Even when the interference radio waves are propagated in the air, the command radio waves using the second frequency band can be received by the near field communication antenna (communication antenna) 12. Therefore, when the command radio waves are received, the propagation of the interference radio waves in the air can be stopped, and the communication between the transmission antenna 2L of the vehicle 2 and the electronic key 3 can be used in the first frequency band to start the engine. Accordingly, it is not necessary to provide a mechanism for shielding the radio waves in the first frequency band or to take out the electronic key 3 from a place for shielding the radio waves in the first frequency band, and thus the key unit 1 can be easily used.

(2) In the key unit 1 according to (1), it is preferable that the control unit 14 stops the output of the interference radio waves when it is determined that a user is in the vehicle cabin 2A.

According to this configuration, since the output of the interference radio waves is stopped under a condition that the user is in the vehicle cabin 2A, it is possible to permit the start of the engine, for example, only when the user gets in the vehicle cabin 2A. Accordingly, security can be improved.

(3) In the key unit 1 according to (1) or (2), it is preferable that the control unit 14 causes the interference radio waves to be output when the radio waves of the second frequency band is not received in a state where the mobile terminal 5 is away from the vehicle 2 and it is determined that the user is not present in the vehicle cabin 2A.

According to this configuration, since the output of the interference radio waves is performed under a condition that no user is in the vehicle cabin 2A, it is possible to avoid a situation in which the door lock of the vehicle 2 cannot be locked due to the presence of the electronic key 3 in the vehicle cabin 2A.

(4) In the key unit 1 according to (2) or (3), it is preferable that the control unit 14 determines whether the user is in the vehicle cabin 2A based on an intensity of communication performed between the near field communication antenna (communication antenna) 12 and the mobile terminal 5.

According to this configuration, in order to determine whether the user is in the vehicle cabin 2A, for example, it is not necessary to provide a seating sensor that detects whether the user is seated on the seat or a camera that captures an image of the user seated on the seat, and thus it is possible to determine whether the user is in the vehicle cabin 2A with an inexpensive configuration.

### Industrial Applicability

The technique disclosed here can be used in a key unit that performs locking and unlocking of a door lock of a vehicle.

## Claims

1. A key unit (1) that houses an electronic key (3) of a vehicle (2), the key unit comprising:
an interference antenna (10) configured to propagate, in the air, interference radio waves interfering with communication performed using a first frequency band between a transmission antenna of the vehicle and the electronic key;
a communication antenna (12) configured to communicate with a mobile terminal (5) in a second frequency band different from the first frequency band; and
a control unit (14) configured to control an output of the interference antenna according to a communication content in the second frequency band.

2. The key unit according to claim 1, wherein
the control unit stops the output of the interference radio waves when it is determined that a user is in a vehicle cabin (2A).

3. The key unit according to claim 1, wherein
in a state where the mobile terminal is away from the vehicle and it is determined that no user is in a vehicle cabin, the control unit causes the interference radio waves to be output when radio waves in the second frequency band are not received.

4. The key unit according to claim 2 or 3, wherein
the control unit determines whether the user is in the vehicle cabin based on an intensity of communication performed between the communication antenna and the mobile terminal.
